# EUROPÄISCHE PATENTSCHRIFT

(11) **EP 4 279 326 B1**
(45) Veröffentlichungstag und Bekanntmachung des Hinweises auf die Patenterteilung: **17.09.2025**
(21) Anmeldenummer: 22196935.5
(22) Anmeldetag: 21.09.2022
(51) Int. Cl.: B60L 53/16, B60L 53/30, H01R 13/447, B60L 53/66, H01R 13/66, H01R 13/627, H01R 13/639, H01R 31/06, H04W 4/40, B60L 53/18

(54) **DOCKINGSTATION, LADESYSTEM, COMPUTERPROGRAMMPRODUKT UND VERFAHREN**
DOCKING STATION, CHARGING SYSTEM, COMPUTER PROGRAM PRODUCT AND METHOD
STATION D'ACCUEIL, SYSTÈME DE CHARGE, PRODUIT PROGRAMME INFORMATIQUE ET PROCÉDÉ

(30) Priorität: 20.05.2022 DE 102022112710
(43) Veröffentlichungstag der Anmeldung: 22.11.2023
(73) Patentinhaber: INRO Elektrotechnik GmbH, 63811 Stockstadt (DE)
(72) Erfinder: Hussi, Christian, 63811 Stockstadt (DE); Ries, Michael, 63811 Stockstadt (DE); Kern, Maximilian, 63811 Stockstadt (DE); Reinold, Lukas, 63811 Stockstadt (DE)
(74) Vertreter: Eisenführ Speiser

(56) Entgegenhaltungen:
- EP-A1- 3 453 559
- WO-A1-2018/115363
- DE-A1- 102013 017 842
- DE-U1- 202012 102 992
- DE-U1- 202021 104 997
- US-A1- 2018 215 280

## Beschreibung

Die Erfindung betrifft eine Dockingstation zum Anschluss einer mobilen Laderegeleinheit an ein Stromversorgungsnetz. Die mobile Laderegeleinheit, die auch als mobile ladungsintegrierte Steuer- und Schutzeinrichtung (IC-CPD) bezeichnet wird, weist ein Gehäuse, einen netzseitigen Anschluss und einen verbraucherseitigen Anschluss auf. Die Laderegeleinheit ist dazu ausgebildet, verbraucherseitig einen Wechselstrom zum Laden bereitzustellen.

Die Laderegeleinheit ist dabei Bestandteil eines mobilen Ladekabels zur Laderegelung und zum Laden von Akkumulatoren von Elektrofahrzeugen. Das mobile Ladekabel besteht aus der Laderegeleinheit, einer elektrischen Leitung, die mit dem verbraucherseitigen Anschluss der Laderegeleinheit verbunden ist und einer beispielsweise dreiphasigen Fahrzeugkupplung zur Kopplung mit dem Elektrofahrzeug. Der netzseitige Anschluss ist als ein in das Gehäuse der Laderegeleinrichtung mechanisch integrierter Steckverbinder ausgebildet und weist eine Kommunikationsschnittstelle auf.

Elektrofahrzeuge sind grundsätzlich bekannt. Der Anteil an Elektrofahrzeugen im Straßenverkehr nimmt über die letzten Jahre stetig zu. Zum Laden von Elektrofahrzeugen sind Wallboxen bekannt, die über ein Ladekabel ohne Laderegeleinheit mit dem Fahrzeug verbunden sind. Diese Wallbox-Ladekabel weisen entweder einen beispielsweise dreiphasigen verbraucherseitigen Festanschluss oder einen beispielsweise dreiphasigen verbraucherseitigen Steckverbinder an ihrem wallboxseitigen Ende und eine Fahrzeugkupplung zur Kopplung mit dem Elektrofahrzeug an ihrem fahrzeugseitigen Ende auf. Das letztgenannte Ladekabel mit dem verbraucherseitigen Steckverbinder am wallboxseitigen Kabelende und der Fahrzeugkupplung am fahrzeugseitigen Ende kann mobil im Fahrzeug transportiert werden, um unterwegs an Ladesäulen der öffentlichen Ladeinfrastruktur angeschlossen zu werden.

Die öffentliche Ladeinfrastruktur umfasst jedoch regelmäßig eine zu geringe Dichte an Ladesäulen, so dass unterwegs auf andere Netzanschlusspunkte, z.B. Haushaltssteckdosen, zurückgegriffen werden muss, um ein Elektrofahrzeug unterwegs zu laden. Zum Verbinden des Elektrofahrzeugs mit solchen anderen Netzanschlusspunkten wird ein weiteres mobiles Ladekabel benötigt, wie es z.B. in DE 10 2019 121 108 B3 beschrieben ist. Ein solches zusätzliches mobiles Ladekabel wird jedoch von vielen Nutzern eines Elektrofahrzeugs nicht angeschafft, sondern es wird bevorzugt, das Elektrofahrzeug im Wesentlichen zu Hause an der dort fest verbauten Ladelösung, insbesondere der Wallbox, zu laden. Der Aktionsradius des Elektrofahrzeugs um diese Wallbox, in dem ein Elektrofahrzeug tatsächlich regelmäßig verwendet wird, ist deshalb vergleichsweise klein.

Ein mobiles Ladekabel mit einer mobilen Laderegeleinheit kann stationär verwendet werden, allerdings liegt die Laderegeleinheit bei der Verwendung auf dem Boden herum und stellt dadurch eine Gefahr dar und ist selbst schlecht geschützt. Sollte der Anwender das mobile Ladekabel hauptsächlich stationär zu Hause verwenden, welches er aber auch im Fahrzeug mitführen können möchte, erscheint der offen liegende Stecker wie beispielsweise ein CEE-Stecker hier überdies optisch störend. Außerdem ist ein leichtes Lösen dieser bekannten Steckverbindung bekanntermaßen nicht komfortabel und leicht möglich. Für den stationären Betrieb ist darüber hinaus bei den bekannten Lösungen neben der Steckverbindung immer eine zusätzliche Wandhalterung erforderlich, wenn die Laderegeleinheit nicht auf dem Boden herumliegen soll. Bei der Wandmontage bzw. beim Abnehmen der Laderegeleinheit von der Wandhalterung sind deshalb immer mehrere Arbeitsschritte auszuführen, bis die Laderegeleinheit endlich einsatzbereit an der Wand installiert ist bzw. im Fahrzeug mitgeführt werden kann. Es muss zunächst der Stecker anschlossen und anschließend die Laderegeleinheit in die Wandhalterung eingesetzt werden bzw. der Stecker gelöst und die Laderegeleinheit aus der Wandhalterung entnommen werden.

Das Dokument DE 20 2021 104 997 U1 beschreibt ein mobiles Ladekabel zur Laderegelung von Akkumulatoren von Elektrofahrzeugen, mit einer Laderegeleinheit, die ein Gehäuse, einen netzseitigen Anschluss und einen verbraucherseitigen Anschluss aufweist, wobei die Laderegeleinheit dazu ausgebildet ist, verbraucherseitig einen Wechselstrom zum Laden bereitzustellen, einem Ladekabel, das mit dem verbraucherseitigen Anschluss der Laderegeleinheit verbunden ist und eine dreiphasige Fahrzeugkupplung zur Kopplung mit dem Elektrofahrzeug umfasst, wobei der netzseitige Anschluss als in das Gehäuse mechanisch integrierter Steckverbinder ausgebildet ist und eine Kommunikationsschnittstelle aufweist, dadurch gekennzeichnet, dass die Kommunikationsschnittstelle Identifikationsmittel aufweist, die ausgebildet sind: zum Identifizieren einer Netzanschlussvorrichtung, insbesondere zur Unterscheidung eines Netzanschlusskabels und einer Netzanschlussstation, die an den Steckverbinder angeschlossen wird, und zum Identifizieren gegenüber der Netzanschlussvorrichtung.

Das Dokument US 2018 0215280 A1 beschreibt eine Ladesteuerungsvorrichtung und ein Steuerungsverfahren. Eine Ladesteuervorrichtung umfasst: eine Kommunikationseinheit, die eine drahtlose Kommunikation durchführt mit mindestens einem Kommunikationsgerät einschließlich einem Fahrzeug; ein Ladestecker, der elektrisch mit einem Ladeeingang, der in dem Fahrzeug vorgesehen ist, verbunden ist; eine Verriegelungseinheit, die in dem Ladestecker angeordnet ist, um eine Verriegelung zwischen dem Ladestecker und dem Ladeeingang durchzuführen oder zu lösen; eine Steuereinheit, die prüft, ob die ID des Fahrzeugs, die von der Kommunikationseinheit empfangen wird, in einer vorgespeicherten Authentifizierungsinformationsliste enthalten ist, als Reaktion auf eine elektrischen Verbindung zwischen dem Ladestecker und dem Ladeanschluss und dem Ladeeingang, und wenn die ID des Fahrzeugs in der vorgespeicherten Authentifizierungsinformationsliste enthalten ist, bestimmt, ob die Verriegelung zwischen dem Ladestecker und dem Ladeeingang gelöst werden soll, abhängig von dem Standort einer zuvor authentifizierten tragbaren Vorrichtung, und steuert die Verriegelungseinheit entsprechend der Bestimmung.

Das Dokument EP 3 453 559 A1 beschreibt ein Ladekabel, insbesondere zum elektrischen Laden eines Elektrofahrzeuges, aufweisend eine Ladeleitung, welche einerseits mit einer Anschlussvorrichtung mit einem aufzuladenden Energiespeicher lösbar elektrisch verbindbar ist und andererseits mit einer Adapterschnittstelle elektrisch verbunden ist, welche mit einem Adapter formschlüssig lösbar verbindbar ist, wobei der Adapter mit einer Energieversorgungseinrichtung lösbar elektrisch verbindbar ist, um elektrische Energie von der Energieversorgungseinrichtung über das Ladekabel an den aufzuladenden Energiespeicher zu übertragen. Um ein besonders kompaktes und robustes Ladekabel zu erreichen, ist vorgesehen, dass die Adapterschnittstelle eine Kommunikationseinrichtung aufweist, welche eine drahtlose Kommunikation mit dem eine entsprechende Kommunikationseinrichtung aufweisenden Adapter ermöglicht, wenn der Adapter mit der Adapterschnittstelle verbunden ist, sodass Steuersignale zwischen der Energieversorgungseinrichtung einerseits und einer Elektronik des Ladekabels und/oder eines an das Ladekabel angeschlossenen Energiespeichers andererseits zwischen dem Adapter und der Adapterschnittstelle drahtlos übertragbar sind.

### Aufgabenstellung

Der Erfindung liegt die Aufgabe zugrunde, eine verbesserte Ladelösung bereitzustellen, die das Laden eines Elektrofahrzeugs sowohl zu Hause als auch unterwegs mobil ermöglicht.

### Erfindung

Erfindungsgemäß wird diese Aufgabe durch eine Dockingstation nach Anspruch 1, ein Ladesystem nach Anspruch 11 und ein Computerprogrammprodukt gemäß Anspruch 12 und 13 gelöst. Besondere Ausgestaltungen und Weiterbildungen der Erfindung sind Gegenstand der abhängigen Ansprüche.

Die erfindungsmäßige Dockingstation zum Anschluss einer mobilen leitungsintegrierten Steuer- und Schutzeinrichtung (IC-CPD), welche nachfolgend kurz als Laderegeleinheit bezeichnet ist, an ein Stromversorgungsnetz weist drei Baugruppen auf. Die Baugruppen sind in einem vorzugsweise gemeinsamen Gehäuse integriert. Als erste Baugruppe sind im Gehäuse Anschlusskontakte für Leiter eines Stromversorgungsnetzes vorgesehen. Das Stromversorgungsnetz ist üblicherweise ein Niederspannungsnetz, beispielsweise ein Einphasenwechselstromnetz mit einer Nennspannung von 230 V, oder ein Dreiphasenwechselstromnetz mit einer Nennspannung von 230/400 V. Als Anschlusskontakte sind sämtliche gängigen Arten von elektrischen Anschlüssen geeignet, beispielsweise Kontaktklemmen oder Steckverbinder oder dergleichen.

Die zweite Baugruppe ist ein mit den Anschlusskontakten elektrisch verbundener Steckverbinder. Dieser Steckverbinder ist in einer Gehäusewand, insbesondere Gehäuseseitenwand, des Gehäuses angeordnet. Der Steckverbinder durchsetzt diese Gehäusewand bzw. Gehäuseseitenwand. Der Steckverbinder ist als dauerhaft unter Spannung stehende Komponente üblicherweise als Buchsenteil ausgestaltet. Der Steckverbinder ist ein Kupplungsteil und wird von einem steckkompatiblen Gegensteckverbinder zur elektrischen Steckkupplung ergänzt. Der Gegensteckverbinder ist dabei der mit Steckerkontakten versehene netzseitige Anschluss der Laderegeleinheit.

Schließlich ist als dritte Baugruppe ein Verriegelungselement vorgesehen, welches bei geschlossener Steckkupplung den Gegensteckverbinder am Steckverbinder der Dockingstation fixiert. Dieses Verriegelungselement weist zwei Funktionsstellungen auf, nämlich die vorstehend beschriebene Verriegelungsposition einerseits und eine Entriegelungsposition andererseits, in der der Gegensteckverbinder vom Steckverbinder abgezogen werden kann, um die Steckkupplung wieder zu öffnen bzw. zu lösen. Schließlich ist ein Sperrglied vorgesehen, um das Verriegelungselement in seiner Verriegelungsposition zu arretieren. In der vorzugsweise arretierten Verriegelungsposition des Verriegelungselements bei geschlossener Steckkupplung ist die Laderegeleinheit sowohl elektrisch als auch mechanisch mit dem Gehäuse der Dockingstation verbunden. Die Laderegeleinheit ist somit am Gehäuse mechanisch gelagert.

Auf diese Weise ist es möglich, die Laderegeleinheit ausschließlich mit der Steckkupplung mechanisch am Gehäuse zu fixieren. Ist das Gehäuse an einer Gebäudewand im Bereich des Stellplatzes des Elektrofahrzeugs oder an einer Garagenwand oder an einer Wand eines Carports angebracht, kann das Ladekabel mit der Laderegeleinheit einfach an die Dockingstation angedockt und verriegelt werden. In dieser angedockten Position bilden die Dockingstation und die an die Dockingstation angedockte Laderegeleinheit ein mit einer Wallbox vergleichbares Ladesystem mit Wandmontage.

Die erste Baugruppe mit den Anschlusskontakten ist dabei vorzugsweise so konfiguriert, dass sowohl eine einphasige Wechselstromleitung als auch eine dreiphasige Wechselstromleitung angeschlossen werden kann. Auf diese Weise hat das aus der Dockingstation und der angeschlossenen Laderegeleinheit gebildete Ladesystem keine Nachteile gegenüber einer Wallbox in Bezug auf das Ladeverhalten beziehungsweise die Ladeschnelligkeit.

Bei geschlossener und verriegelter Steckkupplung wird das Ladekabel mit der Laderegeleinheit folglich wie ein stationäres Ladekabel verwendet. Wird die Steckkupplung geöffnet, ist es darüber hinaus möglich, den Steckverbinder und den Gegensteckverbinder voneinander zu lösen, sodass das Ladekabel insbesondere unter Einsatz eines für die jeweilige Netzanschlussteckdose geeigneten Adapterkabels als mobiles Ladekabel verwendet werden kann. Der Benutzer der Erfindung kann somit das Ladekabel sowohl als stationäres als auch als mobiles Ladekabel verwenden, so dass die Notwendigkeit der Anschaffung des vorerwähnten zusätzlichen mobilen Ladekabels ersatzlos entfällt. Die dadurch entstehende Kostenersparnis liegt auf der Hand. Zudem muss sich der Nutzer des Elektrofahrzeugs nur an die Bedienung eines einzigen Ladekabeltyps gewöhnen und muss nicht zwischen mehreren Systemen beim Laden hin und her wechseln.

Zur Verbesserung der mechanischen Lagerung der Laderegeleinheit können an der Gehäusewand ein Vorsprung oder mehrere Vorsprünge ausgebildet sein. Diese Vorsprünge können auch als durchgehende Leisten ausgebildet sein. An der der Gehäusewand gegenüberliegenden Wandung der Laderegeleinheit sind entsprechende komplementäre Nuten ausgebildet, in welche bei geschlossener Steckkupplung die Vorsprünge bzw. Leisten nach Art einer Nut- Feder-Verbindung eingreifen. Die Ausprägung von Vorsprüngen und komplementären Nuten kann auch umgekehrt sein, so dass die Vorsprünge entsprechend auf der Laderegeleinheit ausgebildet sind.

Weiterhin vorteilhaft ist es, eine in Richtung auf die Laderegeleinheit abragende Anlagezunge am Gehäuse der Dockingstation vorzusehen. Diese Anlagezunge ist vorzugsweise so ausgestaltet, dass sie das Regeleinheitsgehäuse der Laderegeleinheit bei geschlossener Steckverbindung seitlich flankiert. Die Anlagezunge trägt dabei in Richtung auf die Laderegeleinheit vorspringende Führungselemente beispielsweise pilzförmige Vorsprünge, die in eine entsprechende Aufnahmenut an Regeleinheitsgehäuse der Laderegeleinheit eingreifen. Diese Aufnahmenut bildet eine geschlossene Bahnführung für die Laderegeleinheit beim Einführen des Gegensteckverbinders in Steckrichtung in den Steckverbinder der Dockingstation und lagert die Laderegeleinheit zusätzlich an der Dockingstation und erleichtert so das Schließen der Steckkupplung. Zudem dient diese Führung dazu, die durch die Ladeleitung / Fahrzeugleitung beispielsweise bei Zug eingeleiteten Kräfte aufzunehmen. Die Aufnahmenut kann auch entsprechend auf der Anlagezunge und die komplementären vorspringenden Führungselemente am Regeleinheitsgehäuse der Laderegeleinheit vorgesehen sein.

In vorteilhafter Ausgestaltung durchsetzen Lageraugen den Gehäuseboden der Dockingstation zur Aufnahme von Befestigungsschrauben für die Wandmontage des Gehäuses. Ferner ist eine Durchleitungstülle für die Leitungskabel des Stromversorgungsnetzes vorgesehen. Vorzugsweise an den Rändern des Gehäusebodens ragen die Gehäusewände im Wesentlichen senkrecht empor. Ebenfalls bevorzugt ist in einer Gehäusewand der Steckverbinder angeordnet und/oder die Anlagezunge ist als Verlängerung des Gehäusebodens ausgebildet.

In weiterer vorteilhafter Ausgestaltung ist am Außenmantel des Steckverbinders ein Drehring drehbar gelagert. Dieser Drehring übergreift bei geschlossener Steckkupplung den Außenmantel des Gegensteckverbinders zumindest teilweise. Der Drehring bildet so das Verriegelungselement für die Steckkupplung. Die Verriegelung ermöglicht eine schnell herstell- und lösbare mechanische Verbindung beispielsweise in Art eines Bajonettverschlusses.

In einer Ausführung ist am Drehring eine vorzugsweise hülsenförmige Bolzenaufnahme gebildet, in welche ein längsverschiebbares, als Sperrbolzen ausgebildetes Sperrelement eingreifen kann. Bei geschlossener Steckkupplung kann der Sperrbolzen in die Bolzenaufnahme hinein verschoben werden, um den Drehring in seiner Verriegelungsposition zu arretieren. Auch andere Arten der Arretierung des Drehrings in seiner Verriegelungsposition sind in vorteilhaften Ausführungen vorstellbar.

In weiterer vorteilhafter Ausgestaltung ist im Gehäuse ein Antrieb, insbesondere ein elektromotorisch angetriebener Spindeltrieb, ein Zahnstangenantrieb, ein Zuganker oder ähnliches, für den Sperrbolzen vorgesehen. Der Sperrbolzen kann so angetrieben in Steckrichtung des Steckverbinders in Richtung auf den Drehring hin und her bewegt werden. Vorzugsweise weist der Elektromotor eine Steuerung mit Positionserfassung für den Sperrbolzen auf. Bei geschlossener Steckkupplung kann der Sperrbolzen beispielsweise elektromotorisch in die Bolzenaufnahme verfahren werden und hebt so die Drehbarkeit des Drehrings auf.

Die Stromversorgung des Elektromotors kann dabei vorzugsweise über die Laderegeleinheit erfolgen. Damit weist die Dockingstation keine elektrischen Bauteile auf, die direkt an das Stromversorgungsnetz angeschlossen sind, was den Aufbau der Dockingstation vereinfacht. Insbesondere kann ein Netzteil zur Umwandlung der Spannung des Versorgungsnetzes in eine üblicherweise benötigte Kleinspannung für den Elektromotor auf Seiten der Laderegeleinheit implementiert sein bzw. das dort üblicherweise bekannte Netzteil für diesen Zweck mit verwendet werden. Damit ist eine Einsparung zusätzlicher Komponenten und auch eine Verkleinerung des in der Dockingstation benötigten Bauraums möglich. Zudem kann damit der Zertifizierungsprozess vereinfacht werden, da alle der elektronischen Komponenten der Dockingstation auf der Niederspannungsseite angeordnet sind und kein Netzteil benötigt wird.

In anderen Ausführungen kann auch ein Netzteil in der Dockingstation vorhanden sein, womit die Unabhängigkeit gegenüber der Ausgestaltung der Laderegeleinheit gewährleistet ist.

Besonders bevorzugt ist eine Kontaktleitung zwischen Dockingstation und Laderegeleinheit zur Kommunikation zwischen Laderegeleinheit und Elektromotor ausgebildet. Damit kann das Ladekabel bzw. die Laderegeleinheit beispielsweise den Elektromotor zum Öffnen bzw. Schließen des Arretierungselementes wie des Sperrbolzens anweisen bzw. steuern. Das Ansteuern kann unmittelbar als Spannungssignal oder über ein Kommunikationsprotokoll erfolgen. Auch andere Arten der Kommunikation sind vorstellbar, beispielsweise kann eine drahtlose Kommunikation zwischen Elektromotor und Ladekabel erfolgen, sobald eine Spannungsversorgung des Elektromotors durch das Ladekabel erfolgt.

In anderen bevorzugten Ausgestaltungen ist auch eine drahtlose Kommunikation unabhängig von dem Verbindungszustand zwischen Dockingstation und Ladekabel vorstellbar, beispielsweise wenn die Dockingstation ein eigenes Netzteil oder zumindest einen Energiespeicher zur Energieversorgung der Elekronikbauteile der Dockingstation aufweist.

Sollte der Elektromotor infolge eines Stromausfalls oder aus anderen Gründen ausfallen ist eine Notentriegelung für den Drehring vorgesehen. Eine derartige Notentriegelung ist insbesondere im Falle eines Stromausfalls erforderlich, weil dann das Elektrofahrzeug nicht mehr über die Dockingstation geladen werden kann, sondern an einer externen Steckdose vorrübergehend geladen werden muss, bis die Ursache des Stromausfalls beseitigt ist, so dass das Ladekabel mit der Laderegeleinheit von der Dockingstation entfernt werden muss, um als mobiles Ladekabel eingesetzt zu werden.

Der manuelle Notantrieb für den Sperrbolzen besteht zunächst aus einer Sollbruchstelle in der Gehäusewand, welche der vom Steckverbinder durchsetzten Gehäusewand gegenüber liegt. Die Sollbruchstelle ermöglicht es, einen Teilbereich der Gehäusewand auszubrechen, wodurch eine Zugangsöffnung zum Antrieb des Sperrbolzens zugänglich wird. Die Zugangsöffnung ist vorzugsweise wasserdicht durch ein entnehmbares Element wie einen Gummistopfen verschlossen.

Am Sperrbolzen ist ein Zuganker montiert, welcher über eine Stellschraube antreibbar ist. Die Stellschraube wird einfach eingeschraubt, wodurch der Zuganker den Sperrbolzen aus seiner Sperrstellung in der Bolzenaufnahme im Drehring herauszieht. Der Drehring kann anschließend wieder manuell entriegelt werden und das Ladekabel mit der Laderegeleinheit von der Dockingstation entfernt werden.

In weiterer vorteilhafter Ausgestaltung ist schließlich aus der Anlagezunge eine schwenkbare Abdeckklappe ausgebrochen. Die schwenkbare Abdeckklappe dient zur Abdeckung der Buchsenkontakte des Steckverbinders bei abgezogenem Gegensteckverbinder, wenn das Ladekabel als mobiles Ladekabel verwendet wird, also bei deaktivierter Dockingstation. Besonders vorteilhaft ist es, wenn das Entriegelungselement, also der Drehring zugleich als Antriebselement für die Abdeckklappe wirksam ist.

Das erfindungsmäßige Ladesystem besteht aus der vorstehend beschriebenen Dockingstation einerseits und einem mit dem Gegensteckverbinder seiner Laderegeleinheit am Steckverbinder der Dockingstation angeschlossenen Ladekabel andererseits.

Das gemäß dem auf die Anmelderin zurückgehenden deutschen Gebrauchsmuster mit dem Aktenzeichen DE 20 2021 104 997.9 ausgebildete mobile Ladekabel umfasst die Laderegeleinheit, die ein Regeleinheitsgehäuse, den netzseitigen Gegensteckverbinder und einen verbraucherseitigen Anschluss aufweist. Die Laderegeleinheit ist dazu ausgebildet, verbraucherseitig einen Wechselstrom zum Laden bereitzustellen. Weiterhin umfasst das mobile Ladekabel die Kabelleitung, die mit dem verbraucherseitigen Anschluss der Laderegeleinheit verbunden ist und eine dreiphasige Fahrzeugkupplung zur Kopplung mit dem Elektrofahrzeug aufweist. Der netzseitige, in das Regeleinheitsgehäuse mechanisch integrierte Gegensteckverbinder weist eine Kommunikationsschnittstelle auf. Die Kommunikationsschnittstelle weist Identifikationsmittel auf, die eine Netzanschlussvorrichtung identifizieren, insbesondere zur Unterscheidung eines 240 V bzw. 240/400 V Wechselstromnetzes und eines Hochleistungsnetzes einer öffentlichen Ladesäule, die an den Steckverbinder angeschlossen wird. Ferner identifiziert die Kommunikationsschnittstelle das mobile Ladekabel gegenüber der Netzanschlussvorrichtung.

Das mobile Ladekabel kann -wie bereits ausgeführt- unterwegs mitgeführt und unabhängig von einer stationären Ladevorrichtung, wie einer Ladesäule, verwendet werden. Es ermöglicht ein Verbinden eines Elektrofahrzeugs mit unterschiedlichen Netzanschlussstationen oder Netzanschlusskabeln und bietet daher dem Nutzer eines Elektrofahrzeugs die Möglichkeit, das Elektrofahrzeug unabhängig von der öffentlichen Ladeinfrastruktur unterwegs zu laden. Dafür wird die Fahrzeugkupplung des mobilen Ladekabels mit dem Elektrofahrzeug und der mechanisch integrierte Steckverbinder mit einer Netzanschlussstation oder über ein Netzanschlusskabel mit einem elektrischen Versorgungsnetz verbunden. Dadurch, dass der Steckverbinder die Kommunikationsschnittstelle mit Identifikationsmitteln aufweist, ist es möglich, dass das mobile Ladekabel eine Netzanschlussvorrichtung und auch sich selbst gegenüber der Netzanschlussvorrichtung identifizieren kann. Die Kommunikationsschnittstelle mit Identifikationsmitteln ermöglicht insbesondere die Verwendung des mobilen Ladekabels mit unterschiedlichen Netzanschlussvorrichtungen. Die Kenntnis über die verbundene Netzanschlussvorrichtung und/oder des verwendeten mobilen Ladekabels kann bevorzugt dazu verwendet werden den zum Laden des Elektrofahrzeugs verwendeten Ladestrom zu regulieren, z.B. durch Einstellen einer Ladestrombegrenzung. Vorzugsweise beinhaltet das mobile Ladekabel und insbesondere die Laderegeleinheit die zum Laden eines Akkumulators eines Elektrofahrzeugs mit einem Wechselstrom notwendigen elektronischen Komponenten. Insbesondere ermöglicht das mobile Ladekabel ein Mode-2-Laden und die Laderegeleinheit übernimmt vorzugsweise die zum Laden notwendigen Kontroll- und Schutzfunktionen, wie eine Ladestrombegrenzung und ein Sicherstellen der Durchgängigkeit der Schutzerdung bis zum Elektroauto. Die Laderegeleinheit kann insbesondere in Form einer sogenannten In-Kabel-Kontrollbox ausgebildet sein.

Weiter wird ein Computerprogrammprodukt vorgeschlagen, insbesondere eine von einer Internet-basierten digitalen Vertriebsplattform für Anwendungssoftware wie einem AppStore herunterladbare Anwendung für ein Smartphone, zur Konfiguration eines mobilen Ladekabels gemäß der vorliegenden Erfindung oder eine bevorzugte Ausgestaltung davon und/oder einer Dockingstation gemäß der vorliegenden Erfindung oder eine bevorzugte Ausgestaltung davon. Das Computerprogrammprodukt umfasst eine Ladeprofileinheit, die dazu ausgebildet ist, wenigstens ein Ladeprofil zur Laderegelung eines Elektrofahrzeugs basierend auf Benutzereingaben zu erzeugen, und eine Updateeinheit, die dazu ausgebildet ist, das Ladeprofil an das mobile Ladekabel und/oder die Dockingstation zu übertragen. Beispielsweise kann das Computerprogrammprodukt eine Datenverbindung zu einem externen Datenverarbeitungsgerät oder einem Server, z.B. einem Cloud-Server, aufbauen und ein Update durchführen, insbesondere um ein geladenes Ladeprofil zu aktualisieren. Auch können Updates zur Laderegelung von einem externen Datenverarbeitungsgerät oder einem Server, z.B. einem Cloud-Server, geladen und entsprechend die in der Dockingstation implementierte Laderegelung aktualisiert werden. Es kann auch ein Update zur Laderegelung einer Laderegeleinheit eines mobilen Ladekabels geladen werden, um eine in der Laderegeleinheit implementierte Laderegelung zu aktualisieren.

Das Computerprogrammprodukt weist alternativ oder zusätzlich eine Verriegelungssteuerkomponente auf, die dazu ausgebildet ist, basierend auf einer Nutzereingabe in das Computerprogrammprodukt das Verriegelungselement in seiner Verriegelungsposition zu arretieren und/oder freizugeben, insbesondere den Antrieb des Sperrglieds anzusteuern. Der Benutzer, beispielsweise auf einem Smartphone, kann somit die Verriegelung zwischen Ladereleinheit und Dockingstation steuern, so dass hierfür keine Nutzerinteraktion mit der Dockingstation nötig ist. Das Computerprogrammprodukt kann dafür entweder direkt mit der Dockingstation oder indirekt über die Laderegeleinheit kommunizieren und beispielsweise die Elektronik der Dockingstation ansteuern.

Schließlich wird ein Verfahren zur Freischaltung eines Ladevorgangs einer Ladeeinrichtung vorgeschlagen. Die Ladeeinrichtung ist beliebig ausgeführt und kann insbesondere eine Wallbox, ein Ladekabel, eine erfindungsgemäße Dockingstation oder ein erfindungsgemäßes Ladesystem umfassen. Das Verfahren umfasst zunächst den Schritt des Identifizierens einer Ladeeinrichtung, die sich innerhalb einer Reichweite eines Funkkommunikationsmittels, insbesondere eines Bluetooth Transcievers, einer Vorrichtung, insbesondere eines Smartphones, befindet. Das Verfahen, das auch als "Keyless Charge" bezeichnet wird, kann beispielsweise durch eine App ausgeführt werden, die auf einem Smartphone installiert ist. In diesem Fall können beispielsweise sich in der Umgebung des Smartphones befindliche Ladeeinrichtungen abgetastet werden, beispielsweise können Bluetooth oder andere Funksignale hierfür empfangen und ausgewertet werden.

Hierbei kann eine Ladeeinrichtung oder es können auch mehrere Ladeeinrichtungen identifiziert werden, beispielsweise wenn sich in einem Parkraum mehrere Ladeeinrichtungen in näherer Umgebung voneinander befinden.

Das Verfahren umfasst weiter ein Ermitteln eines Abstandes der Vorrichtung von der Ladeeinrichtung, insbesondere unter Verwendung eines Signalstärke des von der Ladeeinrichtung empfangenen Funkkommunikationssignals. Auch andere Wege der Abstandsbestimmung sind vorstellbar. Die Abstandserkennung kann durch die Vorrichtung, beispielsweise das Smartphone, selbst oder durch die Ladeeinrichtung erfolgen.

Das Verfahren umfasst schließlich ein Freischalten des Ladevorgangs der Ladeeinrichtung, wenn der ermittelte Abstand einen Annäherungsschwellwert unterschreitet. Damit wird sichergestellt, dass sich das zu ladende Fahrzeug und damit der Nutzer, der die Vorrichtung mit sich führt, tatsächlich zum Anschließen des Ladekabels und zum Laden des Fahrzeugs an der Ladeeinrichtung befindet. Anders ausgedrückt, ein ungewolltes Freischalten des Ladevorgangs kann erschwert werden.

Vorzugsweise enthält das Verfahren weiter den Schritt des Auswählens einer von mehreren innerhalb der Reichweite identifizierten Ladeeinrichtungen als freizuschaltende Ladeeinrichtung, wobei der Schritt des Auswählens ein Bestimmen der zu der Vorrichtung nächstgelegenen Ladeeinrichtung umfasst. Wenn sich also mehr als eine Ladeeinrichtung in der Umgebung der Vorrichtung befinden, derart, dass Signale mehrerer Ladeeinrichtungen von der Vorrichtung empfangen werden, muss das Verfahren eine der identifizierbaren Ladeeinrichtungen auswählen, für die der Ladevorgang freigeschalten werden soll. Hierbei ist die Herausforderung diejenige Ladeeinrichtung zu identifizieren, an die der Nutzer tatsächlich sein Fahrzeug zum Laden angeschlossen hat bzw. anschließen will. Erfindungsgemäß wird hierfür diejenige Ladeeinrichtung ausgewählt, die den geringsten Abstand zu der Vorrichtung aufweist. Die Auswahl kann erneut wie bereits die Abstandsbestimmung von der Ladeeinrichtung selbst oder von der Vorrichtung durchgeführt werden. Wird die Auswahl von der Ladeeinrichtung durchgeführt, wird vorzugsweise eine Kommunikation zwischen den Ladeeinrichtungen durchgeführt, mittels welcher die Ladeeinrichtungen sich zum jeweiligen Abstand der Vorrichtung austauschen bzw. synchronisieren.

Anhand eines Ausführungsbeispiels ist die Erfindung mit weiteren Details erläutert. Es zeigen:
- Fig. 1: schematisch ein Ladekabel umfassend ein mobiles Ladekabel und eine Netzanschlussstation,
- Fig. 2: eine perspektivische Ansicht einer Dockingstation und
- Fig. 3: eine Draufsicht auf eine geöffnete Dockingstation gemäß Fig. 2.

Identische und baugleiche Teile sind mit identischen Bezugsziffern versehen. Die Figuren enthalten teilweise vereinfachte oder schematische Darstellungen. Verschiedene Ansichten gleicher Teile können unterschiedlich skaliert sein.

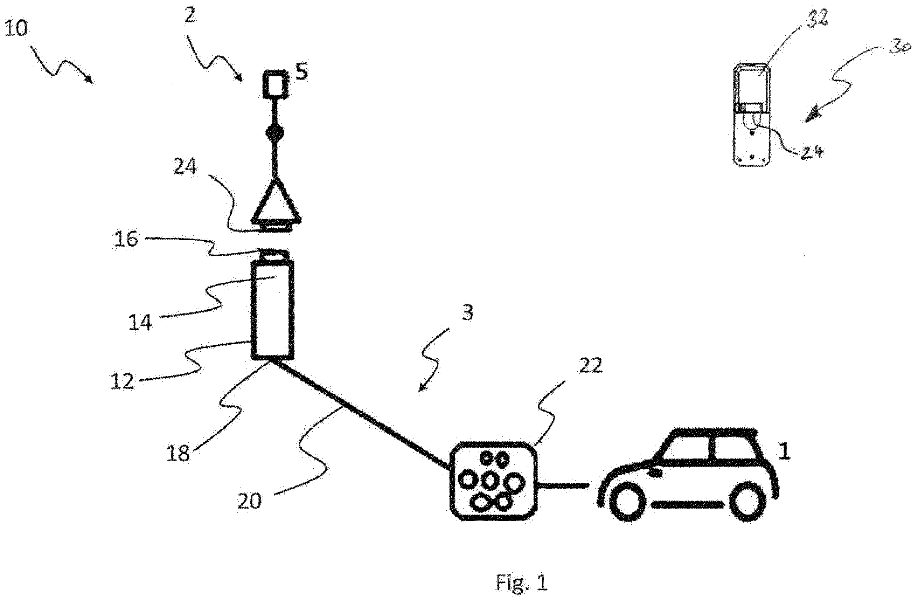

Fig. 1 zeigt ein Ladesystem 10 umfassend eine Dockingstation 30 und ein mobiles Ladekabel 3. Das mobile Ladekabel 3 umfasst eine Laderegeleinheit 12, die ein Regeleinheitsgehäuse 14, einen als Gegensteckverbinder ausgebildeten netzseitigen Anschluss 16 und einen verbraucherseitigen Anschluss 18 aufweist. Die Laderegeleinheit 12 kann insbesondere eine In-Kabel-Kontrollbox sein und ist dazu ausgebildet, verbraucherseitig einen Wechselstrom zum Laden bereitzustellen.

Das mobile Ladekabel 3 umfasst weiterhin eine elektrische Kabelleitung 20, das fest mit dem verbraucherseitigen Anschluss 18 der Laderegeleinheit 12 verbunden ist und eine dreiphasige Fahrzeugkupplung 22 zur Kopplung mit einem Elektrofahrzeug 1 umfasst. Die Fahrzeugkupplung 22 ist insbesondere ein Typ-2-Ladestecker und ist fest mit der Kabelleitung 20 verbunden. Die Fahrzeugkupplung 22 ist mit einem Elektrofahrzeug 1 verbunden, das nicht Teil des Ladesystems 10 ist.

Der netzseitige Gegensteckverbinder 16 umfasst eine Kommunikationsschnittstelle mit Identifikationsmitteln (nicht gezeigt). Die Identifikationsmittel dienen zum einen dazu, die Dockingstation 30 im stationären Betrieb oder einen mobilen Netzanschlussadapter 2 im Mobilbetrieb zu identifizieren, mit welchen der Gegensteckverbinder 16 jeweils beim Laden verbunden ist und zum anderen dazu, dass das mobile Ladekabel 3 von der Dockingstation 30 oder dem mobilen Netzanschlussadapter 2 identifiziert werden kann. Zu diesem Zweck sind die Identifikationsmittel insbesondere ausgebildet, die Identität der Dockingstation 30 bzw. des Netzanschlussadapters 2 abzufragen und die Identität des mobilen Ladekabels 3 an die Dockingstation 30 oder den Netzanschlussadapter 2 bereitzustellen. Die Identität kann beispielweise eine in der Laderegeleinrichtung 12 oder in der Dockingstation 30 bzw. dem Netzanschlussadapter 2 hinterlegte Kennung sein, die eine eindeutige Identifizierung der Dockingstation 30 bzw. des Netzanschlussadapters 2 oder des mobilen Ladekabels 3 ermöglicht.

Die Dockingstation 30 dient dem Anschluss des mobilen Ladekabels 3 zur Laderegelung eines Akkumulators des Elektrofahrzeugs 1. Die Dockingstation 30 ist dauerhaft und fest mit einem elektrischen Versorgungsnetz, insbesondere dem 230 V bzw. 230/400 V Niederspannungsnetz, verbunden.

Die Dockingstation 30 umfasst weiterhin einen Steckverbinder 24 zur Verbindung mit dem mobilen Ladekabel 3. Die vom Steckverbinder 24 der Dockingstation 30 und dem Steckverbinder 16 des mobilen Ladekabels 3 gebildete Steckkupplung ermöglicht eine mechanische und elektrische Verbindung der Laderegeleinheit 12 des mobilen Ladekabels 3 mit der stationären Dockingstation 30.

Auch der Steckverbinder 24 der Dockingstation 30 weist eine Kommunikationsschnittstelle mit Identifikationsmitteln (nicht gezeigt) auf, die es erlauben das verbundene mobile Ladekabel 3 zu identifizieren und auch, dass die Dockingstation 30 von dem mobilen Ladekabel 3 identifiziert wird.

Im Gegensatz zu bekannten mobilen Ladelösungen, die anhand eines passenden Adapters an einen Stromanschluss angeschlossen werden, handelt es sich bei dem Ladesystem 10 um eine Ladelösung, bei der eine stationäre Einheit (die Dockingstation 30) fest mit dem Stromnetz verdrahtet ist, und eine mobile Ladeeinheit (das mobile Ladekabel 3) mittels einer Steckverbindung mit der stationären Einheit verbunden und wieder entkoppelt werden kann.

Das Ladesystem 10 bietet Vorteile wie Komfort und Funktionalität einer stationären Einheit und erlaubt es einem Nutzer eine mobile Ladeeinheit (das mobile Ladekabel 3) aus der stationären Einheit zu entnehmen. Das Ladesystem 10 kann wie eine herkömmliche Wallbox als reine stationäre Ladelösung verwendet werden. Das Ladesystem 10 kann aber auch als rein mobile Ladelösung verwendet werden, indem das mobile Ladekabel 3 von der Dockingstation 30 getrennt und als eigenständige Einheit mitgeführt wird. Ein Nutzer kann somit mit nur einer Ladelösung von einer mobilen Lademöglichkeit profitieren ohne doppelte Investitionskosten zu tragen und ohne auf die Vorteile einer stationären Einheit bezüglich der Funktionalität verzichten zu müssen.

Wenn das Ladesystem 10 als mobile Ladelösung verwendet werden soll, d.h., wenn das mobile Ladekabel 3 unabhängig von der Dockingstation 30 verwendet wird, kann das mobile Ladekabel 3 anstelle des Netzanschlussadapters 2 mit einem nicht dargestellten Netzanschlusskabel verbunden werden, um dieses an ein elektrisches Versorgungsnetz bzw. eine Ladesäule oder Wallbox anzuschließen. Das Netzanschlusskabel weist dafür an seinem einen Ende einen Steckverbinder zum Verbinden mit dem Gegensteckverbinder 16, und an seinem anderen Ende einen Stecker zum Verbinden mit einer Netzsteckdose, insbesondere einer Schuko-Steckdose, auf.

Sowohl die Steckkupplung zwischen dem Steckverbinder 24 der Dockingstation 30 und dem Gegensteckverbinder 16 des mobilen Ladekabels 3 als auch die Steckverbindung zwischen dem Steckverbinder 16 des mobilen Ladekabels 3 und dem Steckverbinder 24 eines Netzanschlusskabels bzw. des Netzanschlussadapters 2 können durch einen Diebstahlschutz, beispielsweise den nachfolgend darsgestellten verriegelbaren Drehring, aber auch ein abschließbares Schloss oder ähnliches, gesichert sein.

Die Dockingstation 30 weist ein Gehäuse 32 auf. In der Gehäusevorderwand 34 ist der Gegensteckverbinder 24 angeordnet. Ferner trägt die Gehäusevorderwand 34 einen als durchgängige Leiste ausgestalteten Vorsprung 36. Der Vorsprung 36 kann mit einer komplementär ausgebildeten Nut am Regeleinheitsgehäuse 14 der Laderegeleinheit 12 eine Nut-Feder-Verbindung ausbilden.

Vorzugsweise weist das Gehäuse 32 eine Gehäusewanne, die an eine dahinter angeordnete Wand anschraubbar ist, und eine auf der Gehäusewanne aufgesetzte Gehäuseabdeckung auf.

Aus der Gehäusevorderwand 34 steht eine Anlagezunge 38 hervor. Die Anlagezunge 38 trägt auf ihrer Anlagefläche für das Regeleinheitsgehäuse 14 der Laderegeleinheit 12 zwei pilzförmige Führungselemente 40. Ferner ist aus der Anlagezunge 38 eine schwenkbare Abdeckklappe 42 ausgebrochen. Die schwenkbare Abdeckklappe 42 dient zur Abdeckung der Buchsenkontakte des Steckverbinders 24 bei abgezogenem Gegensteckverbinder 16, wenn das Ladekabel 3 als mobiles Ladekabel 3 verwendet wird, also bei deaktivierter Dockingstation 30.

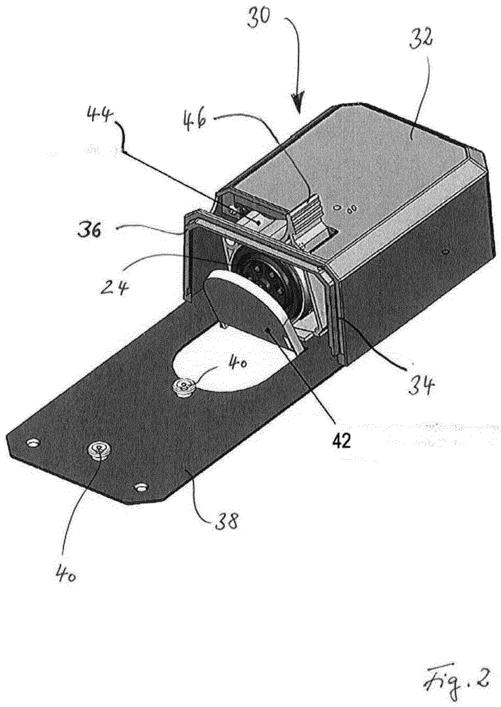

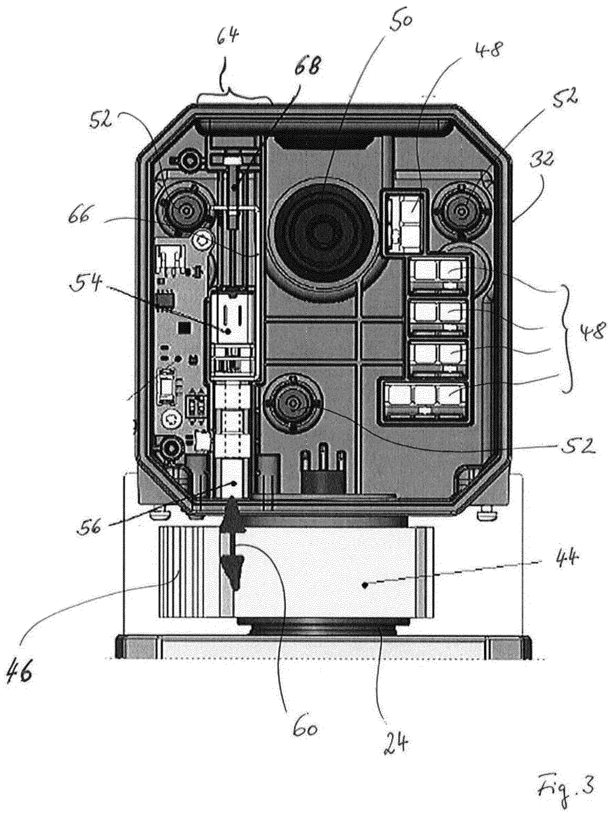

Schließlich ist am Steckverbinder 24 ein Drehring 44 mit einer Handhabe 46 adaptiert. Mit der Handhabe kann der Drehring 44 zwischen einer in Fig. 3 dargestellten Verriegelungsposition und einer in Fig. 2 dargestellten Entriegelungsposition hin und her gedreht werden. In der Verriegelungsposition gemäß Fig. 3 verriegelt der Drehring 44 die vom Steckverbinder 24 und von dem in den Steckverbinder 24 eingesteckten Gegensteckverbinder 16 gebildete Steckkupplung nach Art eines Bajonettverschlusses.

Im Gehäuse 32 sind mehrere Anschlusskontakte 48 zum Anschluss der Dockingstation 30 an das Stromnetz montiert. Die Leitungsadern der Anschlusskabel werden durch eine eine Wandung des Gehäuses 32 durchbrechende Durchleitungstülle 50 in das Gehäuse eingeführt. Die Wandung des Gehäuses ist ferner von Lageraugen 52 zur Aufnahme von Befestigungsschrauben für die Wandmontage des Gehäuses 32 durchsetzt.

Schließlich ist im Gehäuse 32 ein Elektromotor 54 angeordnet. Der Elektromotor 54 treibt einen linear verschiebbaren Sperrbolzen 56 an.

Der Sperrbolzen 56 kann so vom Elektromotor 54 angetrieben in Steckrichtung 60 des Steckverbinders 24 in Richtung auf den Drehring 44 hin und her bewegt werden. Bei geschlossener Steckkupplung wird der Sperrbolzen 56 in eine in den Drehring eingeformte Bolzenaufnahme verfahren und hebt so die Drehbarkeit des Drehrings 44 auf. Die Stromversorgung des Elektromotors 54 erfolgt über das Ladekabel 3.

Sollte der Elektromotor 54 infolge eines Stromausfalls oder aus anderen Gründen ausfallen ist eine Notentriegelung für den Drehring 44 vorgesehen. Die Notentriegelung besteht zunächst aus einer Sollbruchstelle 64 in der Gehäusewand, welche der vom Steckverbinder 24 durchsetzten Gehäusewand gegenüber liegt. Die Sollbruchstelle 64 ermöglicht es, einen Teilbereich der Gehäusewand auszubrechen, wodurch eine Zugangsöffnung zum Antrieb des Sperrbolzens geöffnet wird. Am Sperrbolzen 56 ist ein Zuganker 66 montiert, welcher über eine Stellschraube 68 antreibbar ist. Die Stellschraube 68 wird einfach in den Zuganker 66 eingeschraubt, wodurch der Zuganker 66 den Sperrbolzen 56 gemeinsam mit dem Elektromotor 54 aus seiner Sperrstellung in der Bolzenaufnahme im Drehring 44 gegen die Steckrichtung 60 herauszieht. Der Drehring 44 kann anschließend manuell entriegelt werden und das Ladekabel 3 mit der Laderegeleinheit 12 von der Dockingstation 30 entfernt werden.

Nachfolgend werden weitere bevorzugte Varianten und Fortbildung als Ausführungsbeispiele beschrieben.

Die Steuerung der Verriegelung zwischen Dockingstation 30 und Laderegeleinheit 12 erfolgt in einer Ausführung über eine Benutzereingabe in eine App, die beispielsweise auf einem Smartphone installiert ist.

In einigen Ausführungen ist die Verriegelung derart ausgeführt, dass sie die mechanische Befestigung der Laderegeleinheit 12 bzw. der IC-CPD an der Dockingstation 30 komplett alleine übernimmt.

Während die Stromversorgung der Elektronikkomponenten der Dockingstation 30 in dem gezeigten Ausführungsbeispiel über die Laderegeleinheit 12 und den Steckverbinder 24 erfolgt, kann in anderen Ausführungen die Stromversorgung und Ansteuerung des bzw. der Aktuatoren aus der Dockingstation 30 direkt erfolgen. Damit kann auch eine Kommunikation mit der Dockingstation 30 unmittelbar und unabhängig von einem Anschluss an eine Laderegeleinheit 12 möglich werden.

Als Beispiel einer manuellen Notentriegelung ist der Zuganker 66, der mit der Stellschraube 68 antreibbar ist, beschrieben. Auch andere Arten der Notentriegelung für den Fall des Ausfalls des Motors bzw. Getriebes sind vorstellbar.

In einer Weiterbildung kann ein mechanisches Schloss und/oder ein Zugmagnet zur Sperrung des Drehrings 44 bzw. des Sperrbolzens 56 vorgesehen sein.

Als Diebstahlschutz kann in einer Weiterbildung ein System zur Verriegelung vorgesehen sein. Hierfür hat der Benutzer einen elektronischen Schlüssel, entweder als separate Vorrichtung oder als elektronische Anwendung auf dem Smartphone, der Funksignale an seine Umgebung sendet. Nur wenn sich die Dockingstation 30 in der Umgebung des elektronischen Schlüssels befindet, wird eine Entriegelung zugelassen. Beispielsweise kann auch eine automatische Verriegelung in dem Fall implementiert sein, in dem der elektronische Schlüssel sich nicht in Reichweite der Dockingstation 30 befindet.

In weiteren Weiterbildungen wird eine Entriegelung des Diebstahlschutzes durch einen an der Dockingstation 30 angeordneten Fingerabdrucksensor bzw. RFID-Leser ermöglicht. Der Benutzer kann dann die Entriegelung durch Abtasten des Fingerabdrucks oder eines geeigneten RFID-Transponders bewirken.

Die Positionserfassung des Sperrbolzens ist auf viele Arten möglich. Beispielsweise weist die Positionserfassung eine Lichtschranke, einen Hallsensor, Reed-Kontakte, einen Schiebeschalter oder ähnliche geeignete Mittel auf.

Die Ausgestaltung der Verriegelung wurde im Zusammenhang mit dem Drehring 44 beispielhaft als Bajonett beschrieben. Auch andere Arten der Verriegelung sind vorteilhaft. In Ausführungsformen wird die Verriegelung über einen Schieber oder Klapphebel umgesetzt.

In Ausführungsformen kann ein Schieber mit Bajonett zur Betätigung mit einer Zahnstangengeometrie gekoppelt sein. Damit wird eine zuverlässige Verriegelung ermöglicht.

In Ausführungsformen wird die Verriegelung anstelle des dargestellten, manuell betätigten Drehrings 44 vollständig elektrisch betätigt und ist von außen unzugänglich. Dadurch ist die Verriegelung diebstahlsicher und kann gleichzeitig die Sperrfunktion übernehmen.

In Weiterbildungen sind andere Verriegelungskinematiken implementiert. Vorzugsweise kann ein Hebelmechanismus an Stelle des beispielhaft beschriebenen Sperrbolzens 56 treten.

In Weiterbildungen kann eine Schraubverbindung zwischen Ladekabel 3, d.h. IC-CPD, und Dockingstation 30 parallel zu dem Steckverbinder 24 ausgebildet sein. Die IC-CPD kann sich insbesondere elektromechanisch über ein Gewinde an der Dockingstation 30 bzw. die Dockingstation 30 an der IC-CPD festschrauben. Hierfür kann an der IC-CPD bzw. der Dockingstation 30 ein elektrisch angetriebenes Gewinde vorgesehen werden, welches sich in ein an der Dockingstation 30 bzw. IC-CPD befindliches Gegengewinde einschrauben kann. Dabei wird zugleich die Steckverbindung hergestellt.

Schließlich wird in Ausführungen der Abdeckmechanismus für die Steckverbindung der Dockingstation 30 über die Verriegelung mitbetätigt. In dem gezeigten Ausführungsbeispiel kann dafür eine mechanische Kopplung zwischen der Abdeckklappe 42 und dem Drehring 44 vorgesehen sein, so dass ein Drehen des Drehrings 42 gleichzeitig zu einer Betätigung der Abdeckklappe 42 von dem Steckverbinder 24 weg bzw. auf diesen zu erfolgt.

Das System in der Art "Keyless Charge" kann in Weiterbildungen aber auch andere Funktionen zusätzlich oder alternativ zu der Verriegelung bzw. Entriegelung ermöglichen. Beispielsweise kann das Smartphone oder die zusätzliche Vorrichtung, die Funksignale an ihre Umgebung sendet, ein Freischalten des Ladevorganges ermöglichen. Damit kann die Notwendigkeit eines manuellen Freischaltens des Ladevorgangs entweder an der Dockingstation 30 oder in einer auf dem Smartphone installierten App vermieden werden. Nachfolgend wird kurz von "Keyless Charge" gesprochen, wobei hierbei sämtliche alternative Implementierungen, einschließlich auf dem Smartphone installierter App und dedizierter zusätzlicher Vorrichtungen, verstanden werden und explizit von dem Begriff "Keyless Charge" umfasst sind.

In einer praktischen Anwendung kann dann ein Nutzer das Ladekabel 3 in der Dockingstation 30 anschließen und die Ladefreigabe erfolgt, wenn das Ladekabel 3 an dem Elektrofahrzeug angeschlossen ist oder wird, automatisch über die Authentifizierung des Systems in der Art "Keyless Charge", beispielsweise über Bluetooth oder einen anderen Funkkommunikationsstandard.

Nach dem Beenden des Ladevorgangs wird die Ladebuchse vorzugsweise über eine Fahrzeug-APP auf dem Smartphone oder manuell an dem Elektrofahrzeug freigegeben. Das Ladekabel 3 kann dann in der Umgebung der Dockingstation 30 verstaut werden.

Besonders vorteilhaft ist es, wenn die Funktion "Keyless Charge" ein berührungsfreies Freischalten des Ladevorgangs bei beliebigen Ladeeinrichtungen, wie beispielsweise dem Ladekabel 3 oder der Dockingstation 30 oder auch einer anderen Wallbox, ermöglicht.

Hierbei ermöglicht die Funktion "Keyless Charge" vorzugsweise eine manuelle oder automatische Auswahl der zugehörigen Ladeeinrichtung, für die der Ladevorgang freigeschaltet werden soll. Besonders bevorzugt ist, dass das Smartphone bzw. die die Funktion "Keyless Charge" ausführende Vorrichtung nur bekannte Charger, also diejenigen Ladeeinrichtungen, auf die das Smartphone bzw. die die Funktion "Keyless Charge" ausführende Vorrichtung eine Zugriffberechtigung hat, per Funk auswählt. Hierfür kann die Funktion "Keyless Charge" beispielsweise auf der Vorrichtung selbst oder in einem Cloudspeicher eine Liste bekannter Charger verwalten, zu denen auch Charger hinzugefügt bzw. von der Charger entfernt werden können.

Insbesondere kann die Funktion "Keyless Charge" detektieren, dass sich die Vorrichtung, insbesondere das Smartphone, auf dem die Funktion "Keyless Charge" ausgeführt wird, in einem Abstand zu der Ladeeinrichtung befindet, der unterhalb einer Annäherungsschwelle liegt. Wenn sich also beispielsweise das Smartphone nah genug an der Ladeeinrichtung, beispielsweise dem Ladekabel 3 oder der Dockingstation 30, befindet und die Annäherungsschwelle überschritten ist, kann der Ladevorgang freigegeben werden.

Beispielsweise kann die Funktion "Keyless Charge" eine Liste bekannter Ladeeinrichtungen speichern, aus denen manuell die gewünschte Ladeeinrichtung gewählt werden kann. Dies kann beispielsweise in Parkräumen mit mehreren verschiedenen Ladeeinrichtungen hilfreich sein, wenn das Fahrzeug an eine der mehreren verfügbaren Ladeeinrichtungen angeschlossen wird. Die Ladeeinrichtungen können in der Funktion "Keyless Charge" mit einem beliebigen Identifikator, beispielsweise einem eindeutigen Namen und/oder einer Nummer, identifiziert werden.

Alternativ oder zusätzlich kann die Funktion "Keyless Charge" detektieren, dass sich mehrere Ladeeinrichtungen in Reichweite, beispielsweise in Reichweite der Bluetoothübertragung oder in Reichweite einer anderen geeigneten Funkkommunikationstechnologie, befinden. In diesem Fall kann die Funktion "Keyless Charge" anhand der Empfangsdaten einen Abstand der jeweiligen Ladeeinrichtungen bestimmen und dann die nächstgelegene der mehreren Ladeeinrichtungen als die freizuschaltende Ladeeinrichtung auswählen. Der Abstand der jeweiligen Ladeeinrichtungen von der die Funktion "Keyless Charge" ausführenden Vorrichtung kann beispielsweise über die Signalstärke der empfangenen Funksignale erfolgen. Auch andere Varianten zur Entfernungsbestimmung sind möglich.

In dieser beschriebenen Ausführung obliegt also die Auswahl der zugehörigen Ladeeinrichtung, für die der Ladevorgang freigeschalten werden soll, der Vorrichtung, die die Funktion "Keyless Charge" ausführt. Alternativ oder zusätzlich kann aber auch die zugehörige Ladeeinrichtung selbst sich als "ausgewählt" erkennen. Hierfür kann die Ladeeinrichtung einen Abstand zu der die Funktion "Keyless Charge" ausführenden Vorrichtung bestimmen, beispielsweise ebenfalls über eine Signalstärke. Der bestimmte Abstand kann dann an umliegende Ladeeinrichtungen kommuniziert werden, wonach diejenige Ladeeinrichtung, die den kürzesten Abstand zu der die Funktion "Keyless Charge" ausführungen Vorrichtung aufweist, den Ladevorgang freischaltet.

### Bezugszeichenliste

- 1: Elektrofahrzeug
- 2: Netzanschlussadapter
- 3: mobiles Ladekabel
- 5: Netzanschluss
- 10: Ladesystem
- 12: Laderegeleinheit
- 14: Regeleinheitsgehäuse
- 16: netzseitiger Anschluss / Gegensteckverbinder
- 18: verbraucherseitiger Anschluss
- 20: Ladekabel
- 22: Fahrzeugkupplung
- 24: Steckverbinder
- 30: Dockingstation
- 32: Gehäuse
- 34: Gehäusevorderwand
- 36: Vorsprung
- 38: Anlagezunge
- 40: Führungselement
- 42: Abdeckklappe
- 44: Drehring
- 46: Handhabe
- 48: Anschlusskontakte
- 50: Durchleitungstülle
- 52: Lagerauge
- 54: Elektromotor
- 56: Sperrbolzen
- 60: Steckrichtung
- 64: Sollbruchstelle
- 66: Zuganker
- 68: Stellschraube

## Patentansprüche

1. Dockingstation (30) zum Anschluss einer Laderegeleinheit (12) an ein Stromversorgungsnetz, umfassend
ein die Baugruppen der Dockingstation (30) einhausendes Gehäuse (32) mit im Gehäuse (32) angeordneten Anschlusskontakten (48) für Leiter des Stromversorgungsnetzes als erste Baugruppe, **gekennzeichnet durch** einen
in einer Gehäusewand angeordneten und die Gehäusewand durchsetzenden Steckverbinder (24) als Kupplungsteil einer mit einem Gegensteckverbinder (16) gebildeten elektrischen Steckkupplung als zweite Baugruppe
weiter **gekennzeichnet durch** ein den Gegensteckverbinder (16) bei geschlossener Steckkupplung am Steckverbinder (24) fixierendes Verriegelungselement, welches zwischen einer Verriegelungsposition und einer Entriegelungsposition hin und her beweglich ist, derart, dass die Laderegeleinheit (12) bei geschlossener Steckkupplung am Steckverbinder sowohl elektrisch angeschlossen als auch mechanisch gelagert ist.

2. Dockingstation (30) nach Anspruch 1,
**gekennzeichnet durch**
ein Sperrglied zur Arretierung des Verriegelungselements in seiner Verriegelungsposition als dritte Baugruppe.

3. Dockingstation (30) nach Anspruch 1 oder 2
**gekennzeichnet durch**
mindestens einen aus der vom Steckverbinder (24) durchsetzten Gehäusewand in Richtung auf die Laderegeleinheit (12) abragenden Vorsprung (36) als Feder zur Ausbildung einer Nut- Feder- Verbindung mit einer an der der Gehäusewand bei geschlossener Steckkupplung gegenüberliegenden Wandung der Laderegeleinheit (12) ausgebildeten Nut.

4. Dockingstation (30) nach einem der Ansprüche 1 bis 3
**gekennzeichnet durch**
eine in Richtung auf die Laderegeleinheit (12) vom Gehäuse (32) abstehenden und die Laderegeleinheit (12) flankierende Anlagezunge (38) mit Führungselementen (40), die zusammen mit korrespondierenden Führungselementen auf Seite der Laderegeleinheit (12) eine Führung, insbesondere Linearführung, zur Kupplung mit dem Steckverbinder (24) ausbilden.

5. Dockingstation (30) nach einem der Ansprüche 1 bis 4
**gekennzeichnet durch**
einen Gehäuseboden mit einem oder mehreren den Gehäuseboden durchsetzenden Lageraugen (52) zur Aufnahme von Befestigungsschrauben für die Montage des Gehäuses (32) an einer Gebäudewand und mit mindestens einer Durchleitungstülle (50) für ein Leitungskabel des Stromversorgungsnetzes mit an den Rändern des Gehäusebodens angeordneten, den Gehäuseboden umsäumenden und vorzugsweise senkrecht aus dem Gehäuseboden abstehenden Gehäusewänden mit dem Steckverbinder (24) in einer Gehäusewand und mit der Anlagezunge (38) als Verlängerung des Gehäusebodens.

6. Dockingstation (30) nach einem der Ansprüche 1 bis 5
**gekennzeichnet durch**
einen am Außenmantel des Steckverbinders (24) drehbar gelagerten und bei geschlossener Steckkupplung den Außenmantel des Gegensteckverbinders (16) zumindest teilweise übergreifenden Drehring (44) als Verriegelungselement mit einer Bolzenaufnahme und mit einem im Gehäuse längsverschiebbar gelagerten Sperrbolzen (56) als Sperrelement derart, dass der Sperrbolzen (56) bei geschlossener Steckkupplung in die Bolzenaufnahme hinein verschiebbar ist zur Arretierung des Drehrings (44) in seiner Verriegelungsposition.

7. Dockingstation (30) nach Anspruch 6
**gekennzeichnet durch**
einen Antrieb, vorzugsweise durch einen Elektromotor angetriebenen Spindeltrieb, für den Sperrbolzen (56), vorzugsweise mit einer Steuerung für den Elektromotor (54) mit Positionserfassung.

8. Dockingstation (30) nach Anspruch 6,
**gekennzeichnet durch**
einen durch einen Elektromotor angetriebenen Spindeltrieb, als Antrieb für den Sperrbolzen (50), vorzugsweise mit einer Steuerung für den Elektromotor (54) mit Positionserfassung, wobei
der Elektromotor (54) zur Stromversorgung und/oder Datenkommunikation über den Steckverbinder (24) mit der Laderegeleinheit (12) koppelbar ist.

9. Dockingstation (30) nach Anspruch 7 oder 8
**gekennzeichnet durch**
einen manuellen Notantrieb für den Sperrbolzen (56) mit einer Stellschraube (68) als Antriebselement und mit einem mittels einer Sollbruchstelle (64) aus der der vom Steckverbinder (24) durchsetzten Gehäusewand gegenüberliegenden Gehäusewand ausbrechbaren Wandabschnitt als Zugang zum Notantrieb, insbesondere zur Stellschraube (68).

10. Dockingstation (30) nach einem der Ansprüche 1 bis 9
**gekennzeichnet durch**
eine vorzugsweise aus der Anlagezunge (38) ausgebrochene und an der Anlagezunge (38) schwenkbar gelagerte Abdeckklappe (42) zur Abdeckung der Kontaktöffnungen des Steckverbinders (24), welche vorzugsweise vom Verriegelungselement angetrieben ist.

11. Ladesystem (10) mit einer Dockingstation (30) nach einem der Ansprüche 1 bis 10 und mit einem Ladekabel (3) mit einer Laderegeleinheit (12) und mit einem Gegensteckverbinder (16), welcher in den Steckverbinder (24) der Dockingstation (30) eingesteckt ist zur Bildung einer geschlossenen Steckkupplung und mit einer über einen verbraucherseitigen Anschluss (18) mit der Laderegeleinheit (12) verbundenen elektrischen Kabelleitung (20), welche mit ihrem der Laderegeleinheit (12) abgewandten Ende eine dreiphasige Fahrzeugkupplung zur Kopplung mit einem Elektrofahrzeug (1) aufweist.

## Claims

1. A docking station (30) for connecting a charging control unit (12) to a power supply network, comprising
a housing (32) enclosing the assemblies of the docking station (30) with connection contacts (48) for conductors of the power supply network arranged in the housing (32) as a first assembly,
**characterized by** a plug connector (24) arranged in a housing wall and passing through the housing wall as a coupling part of an electrical plug coupling formed with a mating connector (16) as a second assembly,
further **characterized by** a locking element that fixes the mating connector (16) to the plug connector (24) when the plug coupling is closed, which can be moved back and forth between a locking position and an unlocking position, such that the charging control unit (12) is both electrically connected and mechanically mounted on the connector when the plug coupling is closed.

2. The docking station (30) according to claim 1,
**characterized by** a locking member for locking the locking element in its locking position as a third assembly.

3. The docking station (30) according to claim 1 or 2,
**characterized by** at least one projection (36) protruding from the housing wall penetrated by the plug connector (24) in the direction of the charging control unit (12) as a spring for forming a tongue and groove connection with a groove formed on the wall of the charging control unit (12) opposite the housing wall when the plug coupling is closed.

4. The docking station (30) according to one of claims 1 to 3,
**characterized by** a contact tongue (38) protruding from the housing (32) in the direction of the charging control unit (12) and flanking the charging control unit (12), with guide elements (40) which, together with corresponding guide elements on the side of the charging control unit (12), form a guide, in particular a linear guide, for coupling with the plug connector (24).

5. The docking station (30) according to one of claims 1 to 4,
**characterized by** a housing base with one or more bearing eyes (52) passing through the housing base for receiving fastening screws for mounting the housing (32) on a building wall and with at least one feed-through grommet (50) for a supply cable of the power supply network, with housing walls arranged at the edges of the housing base, surrounding the housing base and preferably protruding vertically from the housing base, with the plug connector (24) in one housing wall and with the contact tongue (38) as an extension of the housing base.

6. The docking station (30) according to one of claims 1 to 5,
**characterized by** a rotating ring (44) mounted rotatably on the outer casing of the plug connector (24) and, when the plug coupling is closed, at least partially overlapping the outer casing of the mating connector (16) as a locking element with a bolt receptacle and a locking bolt (56) mounted in the housing so that it can be moved longitudinally as a locking element, such that when the plug coupling is closed, the locking bolt (56) can be moved into the bolt receptacle to lock the rotary ring (44) in its locking position.

7. The docking station (30) according to claim 6
**characterized by** a drive, preferably a spindle drive driven by an electric motor, for the locking bolt (56), preferably with a control for the electric motor (54) with position detection.

8. The docking station (30) according to claim 6,
**characterized by** a spindle drive driven by an electric motor as a drive for the locking bolt (50), preferably with a control for the electric motor (54) with position detection, wherein
the electric motor (54) can be coupled to the charging control unit (12) via the plug connector (24) for power supply and/or data communication.

9. The docking station (30) according to claim 7 or 8,
**characterized by** a manual emergency drive for the locking bolt (56) with an adjusting screw (68) as drive element and with a wall section that can be broken out by means of a predetermined breaking point (64) from the housing wall opposite the housing wall penetrated by the plug connector (24) as access to the emergency drive, in particular to the adjusting screw (68).

10. The docking station (30) according to one of claims 1 to 9
**characterized by** a cover flap (42) preferably broken out of the contact tongue (38) and pivotably mounted on the contact tongue (38) to coverthe contact openings of the plug connector (24), which is preferably driven by the locking element.

11. A charging system (10) with a docking station (30) according to one of claims 1 to 10 and with a charging cable (3) with a charging control unit (12) and with a mating connector (16), which is plugged into the plug connector (24) of the docking station (30) to form a closed plug coupling, and with an electrical cable line (20) connected to the charging control unit (12) via a consumer-side connection (18), which has a three-phase vehicle coupling at its end facing away from the charging control unit (12) for coupling to an electric vehicle (1).

## Revendications

1. Station d'accueil (30) pour le raccordement d'une unité de régulation de charge (12) à un réseau d'alimentation électrique, comprenant
un boîtier (32) logeant les modules de la station d'accueil (30) et présentant des contacts de raccordement (48), agencés dans le boîtier (32), pour les conducteurs du réseau d'alimentation électrique en tant que premier module, **caractérisée par**
une prise (24) agencée dans une paroi de boîtier et traversant la paroi de boîtier en tant que pièce de connexion d'un connecteur enfichable électrique formé avec un contre-connecteur (16) en tant que deuxième module,
en outre **caractérisée par**
un élément de verrouillage fixant le contre-connecteur (16) sur la prise (24) lorsque le connecteur enfichable est fermé, lequel élément de verrouillage est mobile en va-et-vient entre une position de verrouillage et une position de déverrouillage de telle sorte que l'unité de régulation de charge (12) est tant raccordée électriquement au connecteur que montée mécaniquement sur le connecteur lorsque le connecteur enfichable est fermé.

2. Station d'accueil (30) selon la revendication 1,
**caractérisée par**
un organe de blocage destiné à arrêter l'élément de verrouillage dans sa position de verrouillage en tant que troisième module.

3. Station d'accueil (30) selon la revendication 1 ou 2,
**caractérisée par**
au moins une saillie (36) dépassant de la paroi de boîtier, traversée par la prise (24), vers l'unité de régulation de charge (12) et servant de languette pour la formation d'une liaison rainure-languette avec une rainure formée au niveau de la paroi de l'unité de régulation de charge (12), opposée à la paroi de boîtier lorsque le connecteur enfichable est fermé.

4. Station d'accueil (30) selon l'une des revendications 1 à 3, **caractérisée par**
une patte de butée (38) faisant saillie à partir du boîtier (32) vers l'unité de régulation de charge (12) et flanquant l'unité de régulation de charge (12), laquelle patte présente des éléments de guidage (40) qui forment, conjointement avec des éléments de guidage correspondants sur le côté de l'unité de régulation de charge (12), un guidage, en particulier un guidage linéaire, pour la connexion avec la prise (24).

5. Station d'accueil (30) selon l'une des revendications 1 à 4, **caractérisée par**
un fond de boîtier pourvu d'un ou de plusieurs œillets de montage (52) traversant le fond du boîtier et destinés à recevoir des vis de fixation pour le montage du boîtier (32) sur un mur de bâtiment, d'au moins un manchon de passage (50) pour un fil conducteur du réseau d'alimentation électrique et de parois de boîtier agencées au niveau des bords du fond de boîtier, bordant le fond de boîtier et faisant de préférence saillie perpendiculairement par rapport au fond de boîtier, la prise (24) étant située dans une paroi de boîtier et la patte de butée (38) représentant un prolongement du fond de boîtier.

6. Station d'accueil (30) selon l'une des revendications 1 à 5, **caractérisée par**
une bague rotative (44) logée de manière rotative au niveau de l'enveloppe externe de la prise (24) et chevauchant au moins partiellement l'enveloppe externe du contre-connecteur (16) lorsque le connecteur enfichable est fermé en tant qu'élément de verrouillage, présentant un logement de boulon et un boulon de blocage (56) logé de manière à pouvoir se déplacer longitudinalement dans le boîtier en tant qu'élément de blocage de telle sorte que le boulon de blocage (56), lorsque le connecteur enfichable est fermé, peut être déplacé dans le logement de boulon pour l'arrêt de la bague rotative (44) dans sa position de verrouillage.

7. Station d'accueil (30) selon la revendication 6, **caractérisée par**
un entraînement, de préférence un entraînement à broche entraîné par un moteur électrique, pour le boulon de blocage (56) et présentant de préférence une commande pour le moteur électrique (54) avec une détection de position.

8. Station d'accueil (30) selon la revendication 6, **caractérisée par**
un entraînement à broche entraîné par un moteur électrique en tant qu'entraînement pour le boulon de blocage (50), présentant de préférence une commande pour le moteur électrique (54) avec une détection de position,
le moteur électrique (54) pouvant être accouplé à l'unité de régulation de charge (12) pour l'alimentation en courant et/ou la communication de données par l'intermédiaire de la prise (24).

9. Station d'accueil (30) selon la revendication 7 ou 8, **caractérisée par**
un entraînement manuel de secours pour le boulon de blocage (56), présentant une vis de réglage (68) en tant qu'élément d'entraînement et une section de paroi pouvant être détachée au moyen d'un point de rupture (64) de la paroi de boîtier opposée à la paroi de boîtier traversée par la prise (24) en tant qu'accès à l'entraînement de secours, en particulier à la vis de réglage (68).

10. Station d'accueil (30) selon l'une des revendications 1 à 9, **caractérisée par**
un clapet de recouvrement (42) de préférence détaché de la patte de butée (38) et logé de manière pivotante sur la patte de butée (38) pour le recouvrement des ouvertures de contact de la prise (24), qui est de préférence entraîné par l'élément de verrouillage.

11. Système de charge (10) présentant une station d'accueil (30) selon l'une des revendications 1 à 10 et présentant un câble de charge (3), pourvu d'une unité de régulation de charge (12), et d'un contre-connecteur (16), qui est enfiché dans la prise (24) de la station d'accueil (30) pour la formation d'un connecteur enfichable fermé, et d'un conducteur (20) électrique connecté à l'unité de régulation de charge (12) par l'intermédiaire d'un raccord (18) côté consommateur, lequel conducteur présente, sur son extrémité à l'opposé de l'unité de régulation de charge (12), une prise de véhicule triphasée pour l'accouplement à un véhicule électrique (1).
